(19) Europäisches Patentamt / European Patent Office / Office européen des brevets

(11) **EP 4 083 398 B1**

(12) **EUROPÄISCHE PATENTSCHRIFT**

(45) Veröffentlichungstag und Bekanntmachung des Hinweises auf die Patenterteilung:
**04.12.2024 Patentblatt 2024/49**

(51) Internationale Patentklassifikation (IPC):
**F01N 9/00** (2006.01) **F01N 3/021** (2006.01)

(21) Anmeldenummer: **21170347.5**

(22) Anmeldetag: **26.04.2021**

(52) Gemeinsame Patentklassifikation (CPC):
**F01N 9/002; F01N 3/021; F01N 9/005;**
F01N 2560/06; F01N 2560/08; F01N 2560/14;
F01N 2900/0402; F01N 2900/0416;
F01N 2900/1404; F01N 2900/1406;
F01N 2900/1411; F01N 2900/1606; Y02T 10/40

(54) **VERFAHREN ZUM BESTIMMEN EINER PARTIKELBELADUNG EINES PARTIKELFILTERS, INSBESONDERE ZUM EINSATZ IN EINER ABGASNACHBEHANDLUNGSEINRICHTUNG FÜR EINEN VERBRENNUNGSMOTOR**

METHOD FOR DETERMINING THE PARTICLE LOADING OF A PARTICLE FILTER, IN PARTICULAR FOR USE IN AN EXHAUST AFTER-TREATMENT DEVICE FOR A COMBUSTION ENGINE

PROCÉDÉ DE DÉTERMINATION D'UNE CHARGE PARTICULAIRE D'UN FILTRE À PARTICULES, EN PARTICULIER DESTINÉ A ÊTRE UTILISÉ DANS UN DISPOSITIF DE TRAITEMENT DES GAZ D'ÉCHAPPEMENT POUR MOTEUR À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**02.11.2022 Patentblatt 2022/44**

(73) Patentinhaber: **Robert Bosch GmbH**
**70442 Stuttgart (DE)**

(72) Erfinder:
- **Guersun, Gonca**
  **70469 Stuttgart (DE)**
- **Alt, Benedikt**
  **71296 Heimsheim (DE)**
- **Barsim, Karim Said Mahmoud**
  **70372 Stuttgart (DE)**

(56) Entgegenhaltungen:
WO-A2-2006/055992     CN-A- 110 725 738
DE-A1- 102004 055 605

## Beschreibung

Technisches Gebiet

Die Erfindung betrifft Partikelfilter zum Reinigen eines Gasmassenstroms, insbesondere Rußpartikelfilter zum Einsatz in Abgasnachbehandlungseinrichtungen von Kraftfahrzeugen. Weiterhin betrifft die Erfindung Verfahren zur genaueren Bestimmung einer Partikelbeladung eines solchen Partikelfilters.

Aus der Offenlegungsschrift DE 10 2004 055 605 A1 ist ein Verfahren zum Bestimmen einer Rußbeladung eines Partikelfilters einer Brennkraftmaschine bekannt. Dabei wird unter anderem eine im Partikelfilter akkumulierte Aschemenge sowie aus einer Druckdifferenz über den Partikelfilter ein Beladungswert für eine Rußbeladung des Partikelfilters bestimmt. Des Weiteren ist ein autoadaptives Modell zur Korrektur des Einflusses von Ascheablagerungen bei der Bestimmung der Rußbeladung in dem Partikelfilter offenbart.

Aus der Offenlegungsschrift CN 110725738 B ist ein Verfahren zur Bestimmung der Filtrationsfähigkeit eines Dieselpartikelfilters bekannt. Im Rahmen des Verfahrens ist unter anderem vorgesehen, dass ein Pipeline-Luftleckage-Korrekturfaktor bestimmt wird, ein vom Differenzdrucksensor erfasster Wert durch den Pipeline-Luftleckage-Korrekturfaktor korrigiert wird und dann ein korrigierter Druckdifferenzwert erhalten wird. Anhand der Beziehung zwischen dem korrigierten Differenzdruckwert und einem unteren Differenzdruckgrenzwert wird bestimmt, ob die Filterkapazität des Dieselpartikelfilters normal ist oder nicht.

Aus der Offenlegungsschrift WO2006/055992 A2 ist ein Emissionsmodell bekannt, welches auf Basis von Motorbetriebsdaten, wie etwa Drehzahl, Drehmoment und anderen Größen, einen aktuellen idealen Wert für die vom Motor emittierte Partikelmasse liefert. Zudem wird auch von einem integrierenden Partikelsensor während einer Messdauer eine gemessene reale integrierte Partikelmasse bestimmt. Die modellierte Partikelmasse und die gemessene Partikelmasse werden einem Vergleicheralgorithmus zugeführt. Ein Wert für die Abweichung dieser beiden Ergebnisse wird zur Korrektur des Emissionsmodells weiter verarbeitet. Zur Korrektur des Emissionsmodells gibt es beispielsweise den Vorschlag mittels eines Faktors den Wert für Partikelemission zu korrigieren.

Technischer Hintergrund

Zur Reduzierung der Partikeldichte in Gasmassenströmen werden üblicherweise Partikelfilter eingesetzt. Beispielsweise werden Partikelemissionen von Verbrennungsmotoren in Kraftfahrzeugen mithilfe von Partikelfiltern reduziert, die einen erheblichen Beitrag zur Reduzierung des Rußpartikelausstoßes von Dieselmotoren und Ottomotoren leisten. Die Partikelfilter werden beim Betrieb des Verbrennungsmotors durch Asche und Rußpartikel beladen, die sich darin in der Wand und im Filterkuchen absetzen. In einem Regenerationsprozess wird in regelmäßigen Zeitabständen unter Zufuhr von Sauerstoff und durch erhöhte Abgastemperaturen die Beladung mit Ruß abgebrannt, um den Partikelfilter zu regenerieren und diesen in einem optimalen Betriebszustand zu halten.

Offenbarung der Erfindung

Erfindungsgemäß sind ein Verfahren zum Bestimmen einer Beladung eines Partikelfilters, insbesondere für die Reinigung von Verbrennungsabgas eines Verbrennungsmotors, gemäß Anspruch 1, und Computerprogrammprodukt und ein maschinenlesbares Speichermedium gemäß den nebengeordneten Ansprüchen vorgesehen.

Weitere Ausgestaltungen sind in den abhängigen Ansprüchen angegeben.

Gemäß einem ersten Aspekt ist ein Verfahren zum Bestimmen einer Partikelbeladung eines Partikelfilters als mindestens eine Beladungsgröße für einen Verbrennungsmotor vorgesehen, mit folgenden Schritten:

- Erfassen oder Bereitstellen von mehreren Zustandsgrößen des zugeführten Gasmassenstroms, die zumindest einen Partikelmassenstrom und eine Druckunterschiedsangabe für einen tatsächlichen Druckunterschied zwischen einer Eingangsseite und einer Ausgangsseite des Partikelfilters umfassen;
- Bestimmen mindestens einer modellierten Beladungsgröße mithilfe eines physikalischen Partikelfiltermodells abhängig von einer oder mehreren Zustandsgrößen eines zugeführten Gasmassenstroms;
- Modellieren einer Korrekturgröße für die mindestens eine modellierte Beladungsgröße mithilfe eines datenbasierten Fehlermodells abhängig von den Zustandsgrößen des zugeführten Gasmassenstroms, der Druckunterschiedsangabe, wobei das Fehlermodell ein temporales konvolutionelles Netzwerk (TCM: temporal convolutional network) umfasst oder diesem entspricht;
- Bestimmen der mindestens einen Beladungsgröße abhängig von der mindestens einen modellierten Beladungsgröße und der modellierten Korrekturgröße.

Die Beladung eines Partikelfilters ist eine essentielle Größe, die das Systemverhalten des Systems, in dem der Partikelfilter betrieben wird, maßgeblich beeinflusst. Bei einer zu hohen Beladung wird ein hoher Gasgegendruck durch den Partikelfilter bewirkt, der zu einem erhöhten Energieverbrauch des Systems oder sogar zu einer mechanischen Beschädigung des Partikelfilters führen kann. Beim Einsatz des Partikelfilters als Abgaspartikelfilter für einen Verbrennungsmotor in einem Kraftfahrzeug führt dies zu einem erhöhten Kraftstoffverbrauch des Verbrennungsmotors.

Weiterhin ist der Filterwirkungsgrad für einen zu gering beladenen Partikelfilter gering, so dass eine Mindestbeladung mit Partikeln für einen ausreichenden Filterwirkungsgrad notwendig ist.

Daher ist es wichtig, die Beladung des Partikelfilters auf einem moderaten Niveau, d.h. in einem bestimmten Bereich, zu halten, um den Filterwirkungsgrad des Filters hinsichtlich Filterung und den Energieverbrauch des gesamten Systems zu optimieren.

Dies erfordert eine Kenntnis der aktuellen Beladung des Partikelfilters, um diese in geeigneter Weise beeinflussen zu können. Das Maß der Beladung des Partikelfilters, das mit einer Beladungsgröße angegeben werden kann, kann durch Aktivieren oder Vermeiden eines Regenerationszyklus eingestellt bzw. verändert werden.

Ein derartiger Regenerationszyklus sieht beispielsweise zur Reduzierung der Beladung eines Rußpartikelfilters für einen Verbrennungsmotor vor, durch Zufuhr von Sauerstoff und Erhöhung der Temperatur im Partikelfilter, die Rußpartikel abzubrennen und diese dadurch aus dem Filter zu entfernen.

Jedoch kann die Beladung eines Partikelfilters nicht direkt gemessen werden, so dass diese auf Basis von verfügbaren Größen während des Betriebs des Systems, wie z.B. des Motorsystems mit dem Verbrennungsmotor, mithilfe eines Partikelfiltermodells modellhaft ermittelt werden muss. Herkömmliche Partikelfiltermodelle sind in der Regel physikalisch basierte Modelle, die das komplexe Verhalten eines Partikelfilters abhängig von Zustandsgrößen abbilden. Gängige Partikelfiltermodelle sind jedoch in der Genauigkeit beschränkt, insbesondere während eines Regenerationszyklus. Zwar sind auch detaillierte Simulationsmodelle für Partikelfilter bekannt, diese eignen sich jedoch nicht für die Online-Berechnung einer Beladungsgröße.

Daher sieht obiges Verfahren vor, ein physikalisches Partikelfiltermodell zu verwenden, das mithilfe eines datenbasierten Fehlermodells korrigiert wird. Das datenbasierte Fehlermodell kann eine Korrekturgröße, z.B. in Form eines Korrektur-Offsets oder eines Korrekturfaktors, für die Korrektur der mindestens einen modellierten Beladungsgröße bereitstellen.

Das Fehlermodell kann trainiert werden, um abhängig von Verläufen der Zustandsgrößen, der Druckunterschiedsangabe eine jeweilige Korrekturgröße für die jeweilige Beladungsgröße anzugeben, wobei die jeweilige Korrekturgröße ausgebildet ist, die jeweilige Beladungsgröße zu beaufschlagen, insbesondere additiv oder multiplikativ zu beaufschlagen.

Das Fehlermodell kann durch Offline-Simulationen des Partikelfilters abhängig von den Zustandsgrößen des Systems und abhängig von einem Unterschied eines realen Werts der mindestens einen Beladungsgröße und eines modellierten Werts der mindestens einen Beladungsgröße trainiert werden.

Da das physikalische Partikelfiltermodell die Beladung abhängig von einer Akkumulation eines Partikelmassenstroms ermittelt, ist es notwendig, eine Struktur des Fehlermodells so vorzusehen, das die Korrekturgröße unter Berücksichtigung des dynamischen Verhaltens des Partikelfilters bestimmt wird. Dies ermöglicht es, dass das Fehlermodell auch akkumulierte Fehler des Partikelfiltermodells abbilden kann, wobei die für die Bestimmung der Beladungsgröße zu berücksichtigenden Zeitreihen sehr lang sein können.

Überraschenderweise wurde festgestellt, dass die Verwendung eines temporalen konvolutionellen Netzwerks (TCN) als Fehlermodell besonders geeignet ist, um die Abweichungen einer modellierten Beladungsgröße von einer realen Beladung des Partikelfilters abzubilden. Insbesondere bei langen Zeitreihen hat sich die Verwendung eines temporalen konvolutionellen Netzwerks als Fehlermodell als genauer und weniger komplex gegenüber herkömmlichen rekurrenten neuronalen Netzen, wie LSTM oder GRU, herausgestellt, die dynamisches Verhalten nur für kürzere Zeithorizonte mit guter Genauigkeit abbilden können.

Die Zustandsgrößen können einen Gasvolumenstrom, eine Temperatur und/oder einen Druck umfassen.

Die mindestens eine Beladungsgröße und die mindestens eine modellierte Beladungsgröße können umfassen:

- eine Wandbeladungsgröße, die eine Menge an Oberflächen eines Filtermaterials des Partikelfilters angelagerten Partikel angibt, und eine modellierte Wandbeladungsgröße, die eine modellierte Menge an Oberflächen des Filtermaterials des Partikelfilters angelagerten Partikel angibt; und/oder,

- eine Kuchenbeladungsgröße, die eine Menge in einem Kuchen auf einer Oberfläche eines Filterelements des Partikelfilters abgelagerten Partikel angibt, und eine modellierte Kuchenbeladungsgröße, die eine modellierte Menge in einem Kuchen auf einer Oberfläche eines Filterelements des Partikelfilters abgelagerten Partikel angibt; und/oder

- einen Filterwirkungsgrad, der die Reinigungseffizienz des Partikelfilters angibt, und einen modellierten Filterwirkungsgrad, der die modellierte Reinigungseffizienz des Partikelfilters angibt.

Es kann vorgesehen sein, dass eine modellierte Druckunterschiedsangabe zwischen eingangsseitigem und ausgangsseitigem Druck über dem Partikelfilter mithilfe des physikalischen Partikelfiltermodells ermittelt wird, wobei die Korrekturgröße für die mindestens eine modellierte Beladungsgröße mithilfe des datenbasierten Fehlermodells weiterhin abhängig von der modellierten Druckunterschiedsangabe durchgeführt wird, wobei das Fehlermodell trainiert ist, um abhängig von Verläufen der Zustandsgrößen, der Druckunterschiedsangabe und der modellierten Druckunterschiedsangabe die jeweilige Korrekturgröße zur Ermittlung der jeweiligen Beladungsgröße anzugeben, wobei die jeweilige Korrekturgröße ausgebildet ist, die jeweilige modellierte Beladungsgröße zu beaufschlagen, insbesondere additiv oder multiplikativ zu beaufschlagen.

Es kann vorgesehen sein, dass das Verfahren zyklisch in Zeitschritten ausgeführt wird, wobei in jedem Zeitschritt die Werte der Zustandsgrößen, der Druckunterschiedsangabe und der modellierten Druckunterschiedsangabe zwischengespeichert werden, wobei dem Fehlermodell Zeitreihen der Zustandsgrößen, der Druckunterschiedsangabe und der modellierten Druckunterschiedsangabe für einen zurückliegenden Auswertungszeitraum bereitgestellt werden.

Weiterhin kann abhängig von der mindestens einen Beladungsgröße der Partikelfilter regeneriert werden oder eine planmäßige Regeneration des Partikelfilters unterbunden werden.

Gemäß einer Ausführungsform kann der Partikelfilter als ein Abgaspartikelfilter in einer Abgasnachbehandlungseinrichtung eines Kraftfahrzeugs verwendet werden.

Gemäß einer weiteren Ausführungsform kann das temporale konvolutionelle Netzwerk des Fehlermodells mit zwischen 5 und 30 residualen Schichten gebildet sein, die ein erstes Unternetzwerk für eine Normalisierung und ein zweites Unternetzwerk für eine kausale Konvolution mit einer sich zu weiter nachgeordneten residualen Schichten erhöhenden Dilationsrate aufweist.

Kurzbeschreibung der Zeichnungen

Ausführungsformen werden nachfolgend anhand der beigefügten Zeichnungen näher erläutert. Es zeigen:

Figur 1　　eine schematische Darstellung eines Motorsystems mit einem Verbrennungsmotor und einem Partikelfilter zum Reinigen des Verbrennungsabgases;

Figur 2　　eine schematische Darstellung des Aufbaus des Partikelfilters;

Figur 3　　ein Blockdiagramm zur Veranschaulichung der Funktion zum Bereitstellen einer korrigierten Ladungsgröße;

Figur 4　　ein Flussdiagramm zur Veranschaulichung eines Verfahrens zum Bestimmen einer Beladungsgröße eines Partikelfilters und zum Betreiben des Motorsystems der Figur 1; und

Figur 5　　eine detailliertere Darstellung der Architektur des Fehlermodells als temporales konvolutionelles Netzwerk.

Beschreibung von Ausführungsformen

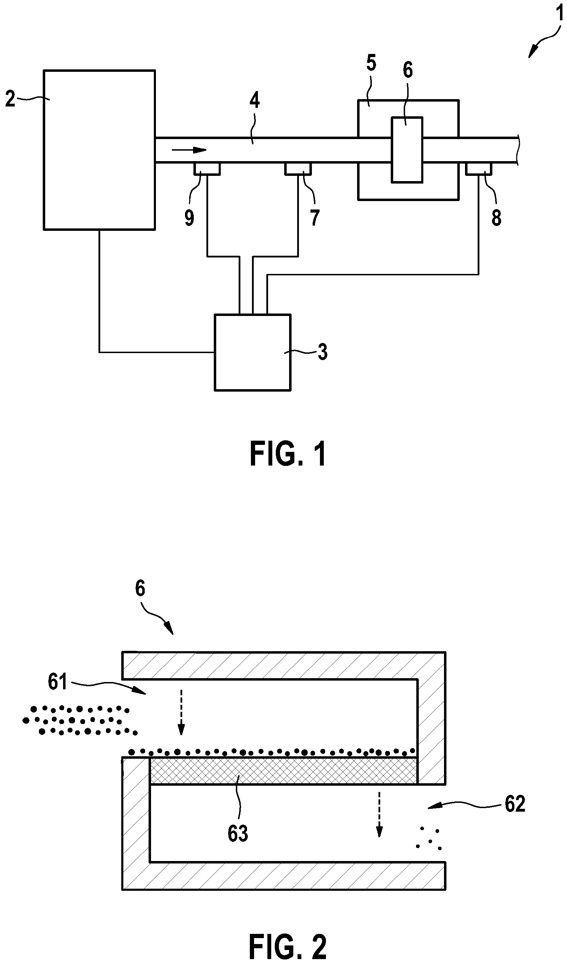

Figur 1 zeigt eine schematische Darstellung eines Motorsystems 1 mit einem Verbrennungsmotor 2, als Beispiel für ein System mit einem Partikelfilter. Der Verbrennungsmotor 2 kann ein Diesel- oder Ottomotor sein, der mithilfe einer Steuereinheit 3 betrieben wird. Über einen Abgasabführungsabschnitt 4 stößt der Verbrennungsmotor 2 Verbrennungsabgas aus, das einer Abgasnachbehandlungseinrichtung 5 mit einem Partikelfilter 6 zugeführt wird. Im Abgasabführungsabschnitt 4 können ein oder mehrere Sensoren 7 angeordnet sein, um Zustandsgrö-βen des Betriebs des Motorsystems 1 sensorisch oder modellbasiert zu erfassen, wie beispielsweise ein Temperatursensor 9 zur Erfassung einer Abgastemperatur T und ein Eingangsdrucksensor 7 zur Erfassung eines Abgasgegendruck $p_{in}$, der als Eingangsdruck des Partikelfilters 6 bereitgestellt wird, wobei abhängig von dem Betriebspunkt und der Last und Drehzahl des Verbrennungsmotors 2 weitere Zustandsgrö-βen, wie beispielsweise ein Abgasmassenstrom V, sowie eine Rußbeladung $\dot{m}_{soot,in}$ des Verbrennungsabgases, mithilfe geeigneter in der Steuereinheit 3 implementierter Modelle modelliert werden können.

Ausgangsseitig des Partikelfilters 6 kann ein weiterer Drucksensor 8 zur Messung einer stromabwärtigen Abgasdrucks $p_{out}$ angeordnet sein. Alternativ kann als stromabwärtiger Abgasdruck der Umgebungsdruck angenommen werden. Alternativ kann auch ein Differenzdrucksensor zur direkten Erfassung der Differenzdruckangabe verwendet werden.

In Figur 2 ist eine schematische Darstellung des Aufbaus des Partikelfilters 6 dargestellt. Der Partikelfilter weist einen Einlasskanal 61 und einen Auslasskanal 62 auf, die durch ein Filterelement 63 aus Filtermaterial getrennt sind. Das Filterelement 63 ist porös und filtert den durch das Filtermaterial 63 durchströmenden Abgasmassenstrom. Das Filtermaterial des Filterelements 63 bietet eine große Oberfläche zur Anlagerung von Rußpartikeln. Beim Abscheideprozess von Rußpartikeln kommt es zu einer Anlagerung von Rußpartikeln auf Oberflächen in dem Filtermaterial. Diese Beladung wird als Wandpartikelbeladung durch eine Wandbeladungsgröße angegeben. Weiterhin kommt es beim Abscheideprozess von Rußpartikeln zu einer Anlagerung von Rußpartikeln in einem Filterkuchen auf der Oberfläche des Filterelements 63. Diese Beladung wird als Kuchenpartikelbeladung durch eine Kuchenbeladungsgröße angegeben. Auch werden in geringerem Umfang Rußpartikel an den Wänden des Einlasskanals 61 angelagert.

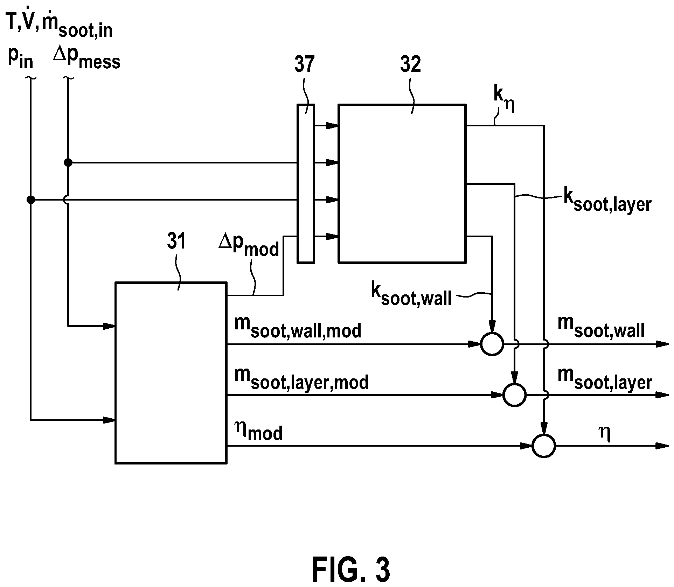

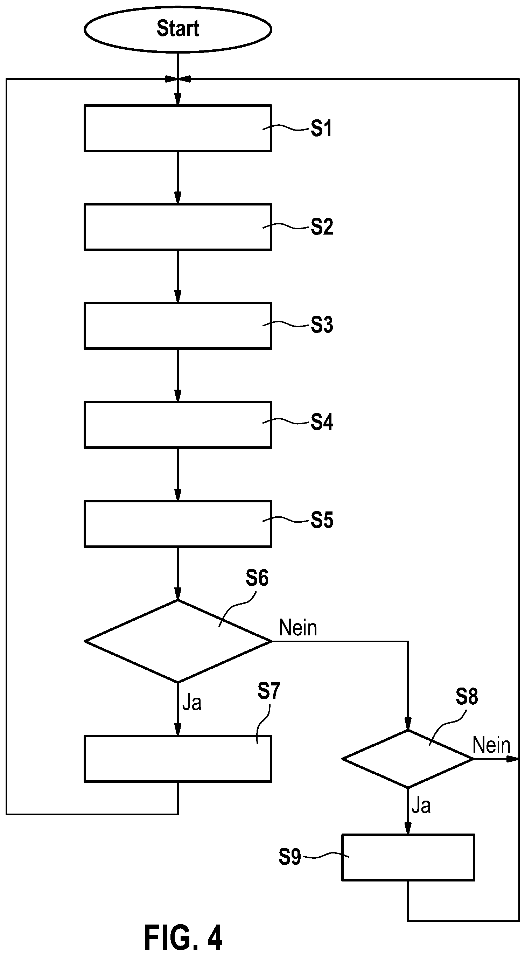

In Verbindung mit dem Funktionsblockschaltbild der Figur 3 und dem Flussdiagramm der Figur 4 wird nachfolgend ein Verfahren zum Betreiben des Partikelfilters 6 näher beschrieben. Das Verfahren kann in der Steuereinheit 3 als Hardware und/oder Software implementiert sein und dient dazu abhängig von den Zustandsgrößen des Motorsystems 1 als Beladungsgrößen eine Wandbeladungsgröße, eine Kuchenbeladungsgrößen und einen Filterwirkungsgrad zu ermitteln.

Das Blockschaltbild der Figur 3 zeigt ein Beladungsmodell 30 mit einem physikalischen Partikelfiltermodell 31, das ausgehend von Zustandsgrößen T, $\dot{m}_{soot,in}$ , $\dot{V}$, $p_{in}$ des Betriebs des Motorsystems 1 eine modellierte Wandbeladungsgröße $m_{soot,wall,mod}$ und eine Kuchenbeladungsgröße $m_{soot,layer,mod}$ bereitstellt. Weiterhin kann das Partikelfiltermodell 31 eine modellierte Druckunterschiedsangabe $\Delta p_{mod}$, z.B. als Differenzdruck $p_{in}$ - $p_{out}$ über dem Partikelfilter 6 modellieren und weiterhin einen Filterwirkungsgrad $\eta_{mod}$ modellieren.

Weiterhin werden die Zustandsgrößen T, $\dot{m}_{soot,in}$, $\dot{V}$, $p_{in}$ sowie die modellierte Druckunterschiedsangabe $\Delta p_{mod}$ aus dem Partikelfiltermodell 31 und eine gemessene Druckunterschiedsangabe $\Delta p_{mess}$ (z.B. als Differenz aus dem gemessenen Eingangsdruck $p_{in}$ und dem gemessenen Ausgangsdruck $p_{out}$ des Partikelfilters 6) einem Schieberegister 37 zugeführt, um Zeitreihen der entsprechenden Größen zu speichern und diese einem nachgelagerten Fehlermodell 32 bereitzustellen. Das Fehlermodell 32 ist datenbasiert und trainiert, um eine Korrekturgröße für die Wandbeladungsgröße $k_{soot,wall}$, eine Korrekturgröße für die Kuchenbeladungsgröße $k_{soot,layer}$ und eine Korrekturgröße $k\eta$ für den Filterwirkungsgrad abhängig von den Zeitreihen der Zustandsgrößen T, $\dot{m}_{soot,in}$, $\dot{V}$, $p_{in}$, der modellierten Druckunterschiedsangabe $\Delta p_{mod}$ aus dem Partikelfiltermodell 31 und der gemessenen Druckunterschiedsangabe $\Delta p_{mess}$ bereitzustellen.

Die Korrekturgrößen $k_{soot,wall}$, $k_{soot,layer}$ und $k\eta$ können jeweils als Korrekturoffset und/oder Korrekturfaktor bereitgestellt werden und werden in entsprechenden Beaufschlagungselementen 33, 34, 35 der modellierten Wandbeladungsgröße $m_{soot,wall,mod}$, der modellierten Kuchenbeladungsgröße $m_{soot,layer,mod}$ und dem modellierten Filterwirkungsgrad $\eta_{mod}$ beaufschlagt. Auf diese Weise erhält man die korrigierte Wandbeladungsgröße $m_{soot,wall}$, Kuchenbeladungsgröße $m_{soot,layer}$ und Filterwirkungsgrad $\eta$ als Ausgangsgrößen. Weiterhin kann das Partikelfiltermodell 31 eine modellierte Druckunterschiedsangabe $\Delta p_{mod}$, z.B. als Differenzdruck $p_{in}$ - $p_{out}$ über dem Partikelfilter 6 modellieren.

In dem Flussdiagramm der Fig. 4, das zyklisch ausgeführt wird, werden zunächst in Schritt S1 die Zustandsgrößen T, $\dot{m}_{soot,in}$, $\dot{V}$, $p_{in}$ erfasst bzw. modelliert oder bereitgestellt.

Das physikalische Partikelfiltermodell 31 akkumuliert in Schritt S2 den aktuellen Partikelmassenstrom in dem Verbrennungsabgas abhängig von den Zustandsgrößen zu der modellierten Wandbeladungsgröße $m_{soot,wall,mod}$, der modellierten Kuchenbeladungsgröße $m_{soot,layer,mod}$ und ermittelt weiterhin den modellierten Filterwirkungsgrad $\eta_{mod}$. Weiterhin wird von dem physikalischen Partikelfiltermodell 31 die modellierte Druckunterschiedsangabe $\Delta p_{mod}$ bereitgestellt.

In Schritt S3 werden die Zustandsgrößen T, $\dot{m}_{soot,in}$, $\dot{V}$, $p_{in}$, die in dem Schieberegister 37 und eine gemessene Druckunterschiedsangabe $\Delta p_{mess}$ in einem geeigneten Schieberegister des Fehlermodells in jedem Zeitschritt zwischengespeichert. Auf diese Weise werden Zeitreihen der Zustandsgrößen T, $\dot{m}_{soot,in}$, $\dot{V}$, $p_{in}$ der gemessenen Druckunterschiedsangabe $\Delta p_{mess}$ und der modellierten Druckunterschiedsangabe $\Delta p_{mod}$ bereitge-stellt.

Weiterhin werden in Schritt S4 die Zeitreihen der obigen Größen dem Fehlermodell 32 zugeführt, das davon abhängig die entsprechenden Korrekturgrößen $k_{soot,wall}$, $k_{soot,layer}$ und $k\eta$ bereitstellt.

In Schritt S5 wird die korrigierte Wandbeladungsgröße $m_{soot,wall}$, die korrigierte Kuchenbeladungsgröße $m_{soot,layer}$ und der korrigierte Filterwirkungsgrad $\eta$ als Ausgangsgrößen aus der modellierten Wandbeladungsgröße $m_{soot,wall,mod}$, der modellierten Kuchenbeladungsgröße $m_{soot,layer,mod}$ und dem modellierten Filterwirkungsgrad $\eta_{mod}$ mithilfe der entsprechenden Korrekturgrößen berechnet, insbesondere durch additive oder multiplikative Beaufschlagung.

In Schritt S6 kann nun abhängig von den so ermittelten Beladungsgrößen $m_{soot,wall}$, $m_{soot,layer}$ und dem Filterwirkungsgrad $\eta$ ein Eingriff in die Betriebsstrategie zur Regeneration des Partikelfilters 6 vorgenommen werden. Dazu kann in Schritt S6 überprüft werden, ob die Summe der Wandbeladungsgröße $m_{soot,wall}$ und der Kuchenbeladungsgröße $m_{soot,layer}$ einen vorgegebenen Schwellenwert übersteigt. Ist dies der Fall (Alternative: Ja), wird in Schritt S7 ein Regenerationszyklus gestartet, in dem der Betrieb des Verbrennungsmotors 2 so modifiziert wird, dass ein erhöhter Sauerstoffeintrag in dem Verbrennungsabgas erfolgt und weiterhin die Verbrennungsabgastemperatur erhöht ist.

Wird der Schwellenwert nicht überschritten (Alternative: Nein), so wird in Schritt S8 überprüft, ob die Summe der Wandbeladungsgröße $m_{soot,wall}$ und der Kuchenbeladungsgröße $m_{soot,layer}$ einen vorgegebenen zweiten Schwellenwert unterschreitet. Ist dies der Fall (Alternative: Ja), so wird in Schritt S9 ein regelmäßiger Regenerationszyklus bis zu einem Überschreiten des zweiten Schwellenwerts unterbunden und gegebenenfalls eine planmäßige Regeneration nicht durchgeführt. Anschließend wird das Verfahren mit Schritt S1 fortgesetzt.

Das Fehlermodell 32 kann als datenbasiertes Fehlermodell ausgebildet sein, insbesondere wird hierin vorgeschlagen, das Fehlermodell als temporales konvolutionales neuronales Netz (TCN: temporal convolutional neural network) auszubilden. Die Architektur eines solchen neuronalen Netzes ist in der Druckschrift Bai S. et al., "An Empirical Evaluation of Generic Convolutional and Recurrent Networks for Sequence Modelling", arxiv:1 802.01271 v2, 19. April 2018 beschrieben.

Das Fehlermodell wird trainiert basierend auf Simulationen der Beladung des Partikelfilters in Verbindung mit dem bereitgestellten physikalischen Partikelfiltermodell. Dazu werden Zeitreihen der obigen Zustandsgrößen durch den Betrieb eines realen Verbrennungsmotors gemessen oder modelliert und mithilfe einer Simulation den entsprechenden Verlauf der Partikelbeladung des Partikelfilters zu ermitteln. Insbesondere erhält man so simulierte Verläufe der Wandbeladungsgröße $m_{soot,wall,mod}$, der Kuchenbeladungsgröße $m_{soot,layer,mod}$ und des Filterwirkungsgrads $\eta_{mod}$.

Weiterhin werden basierend auf den Zustandsgrößenverläufen das physikalische Partikelfiltermodell ausgewertet, um die Verläufe der modellierten Wandbeladungsgröße $m_{soot,wall,mod}$, der modellierten Kuchenbeladungsgröße $m_{soot,layer,mod}$ und dem modellierten Filterwirkungsgrad $\eta_{mod}$ sowie der modellierten Druckunterschiedsangabe $\Delta p_{mod}$ zu erhalten. Zu den einzelnen Stützstellen dieser modellierten und simulierten Verläufe werden nun die jeweiligen Korrekturgrößen insbesondere zur additiven oder multiplikativen Beaufschlagung bestimmt.

Dadurch werden Trainingsdatensätze für das Trainieren des Fehlermodells 32 ermittelt, die Verläufe der Zustandsgrößen T, $\dot{m}_{soot,in}$, $\dot{V}$, $p_{in}$, der modellierten Druckunterschiedsangabe $\Delta p_{mod}$ und der gemessenen Druckunterschiedsangabe $\Delta p_{mess}$ bereitstellen und diese einer Korrekturgröße zu einem aktuellen Zeitschritt zuordnen, der dem letzten Zeitschritt der Verläufe entspricht. Das Fehlermodell kann mit diesen Trainingsdatensätzen offline trainiert werden. Auf diese Weise kann das Fehlermodell 32 basierend auf den sehr genau ausführbaren Beladungssimulationen eines Partikelfilters trainiert werden.

Die in dem Beladungsmodell berücksichtigten Zustandsgrößenverläufe entsprechen Zeitreihen der der aufgeführten Zustandsgrößen für einen vorbestimmten Auswertungszeitraum bzw. eine vorbestimmte Länge der Zeitreihe. Beispielsweise kann die Zeitreihe einem Bereich zwischen 10 s und 60 s und einer Anzahl von Datensätzen zwischen 200 und 2.000 entsprechen.

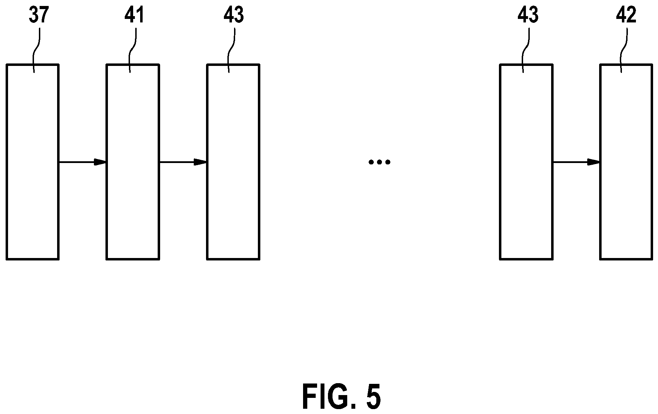

Das Fehlermodell 32 kann als neuronales Netz mit einer Eingangsschicht 41, einer Ausgangsschicht 42 und einer Anzahl von beispielsweise zwischen 5 und 30 residualen Schichten ausgebildet sein, wie in Figur 5 dargestellt. Jede Schicht umfasst eine Anzahl von Neuronenelementen, die funktional mit Neuronenelementen anderer Schichten verbunden sind.

Die Eingangsschicht 41 stellt eine Repräsentation der Zeitreihen der Zustandsgrößenverläufe, der modellierten Druckunterschiedsangabe und der gemessenen Druckunterschiedsangabe für den Auswertungszeitraum dar. Die Ausgangsschicht 42 stellt einen linearen Klassifizierer in Form eines Dense Layers dar, um die betreffenden Korrekturgrößen, d.h. die Korrekturgröße für die Wandbeladungsgröße $k_{soot,wall}$, die Korrekturgröße für die Kuchenbeladungsgröße $k_{soot,layer}$ und die Korrekturgröße für den Filterwirkungsgrad $k\eta$ bereitzustellen.

Jede der residualen Schichten 43 umfasst eine Reihe von mathematischen Operationen, die nachfolgend erläutert werden. Jede residuale Schicht 43 weist mehrere Unternetzwerke auf. Ein erstes Unternetzwerk umfasst eine Gewichtungsnormalisierung, ein zweites Unternetzwerk eine kausale Konvolution, und eine drittes Unternetzwerk eine nichtlineare Aktivierungsfunktion und eine Testzeit-Dropout-Schicht.

Ein Zustandsgrößenverlauf mit einer Zeitreihe von $[x(t)]_{t=1}^{d} \in \mathbb{R}^d$ wird somit zunächst in einer kausalen Konvolutionsschicht mit normalisierten Gewichtungen verarbeitet. Der Gewichtungskernel der konvolutionellen Schicht kann sein: $\mathbf{w} = [w(t)]_{t=1}^{K} \in \mathbb{R}^K$, wobei K die Kernelgröße darstellt. Die Gewichtnormalisierung zerlegt die Gewichtungen der Kanäle in normalisierte Darstellungen $\mathbf{w} = \dfrac{g}{||\mathbf{v}||}\,\mathbf{v}$, wobei g die Magnitude des Gewichtungsvektors w und $\dfrac{v}{|v|}$ seine Richtung repräsentiert.

Das entsprechende Ausgangssignal $\mathbf{y} = [y(k)]_{k=1}^{d} \in \mathbb{R}^d$ der kausalen Konvolution ist wie folgt:

$$y(t) = \frac{g}{||\mathbf{v}||}\sum_{k=1}^{K} x(t - k \cdot r) \cdot v(k)$$

wobei r der Dilationsrate entspricht und sich geometrisch von einer residualen Schicht 43 zur nächsten residualen Schicht erhöht, um so den effektiven Bereich des Auswertungszeitraums für die hinteren residualen Schichten 43 zu maximieren. Anschließend wird das convolutierte Signal y mit einer nicht-linearen Aktivierungsfunktion (z.B. ReLu) beaufschlagt.

Mithilfe eines optionalen Dropout-Prozesses kann ein Modellparameter in allen Neuronenschichten des neuronalen Netzes außer der Ausgangsschicht zufällig und mit einer bestimmten Wahrscheinlichkeit zu null gesetzt werden. Beim Training des Fehlermodells vermeidet man durch diese Maßnahme ein Overfitting des Modells. In der Anwendung des Fehlermodells für die Prädiktion kann bei einer wiederholten Berechnung mit denselben Eingangsgrößen und Anwendung der Dropout Maßnahme ein entsprechend stochastisches Ausgangssignal erzeugen, das zur Ermittlung der Korrekturgröße ausgewertet werden kann, siehe auch Yarin Gal et al. "Dropout as a Bayesian Approximation: Representing Model Uncertainty in Deep Learning", University of Cambridge, https://arxiv.org/pdf/1506.02142.pdf.

$$z(t) = \max(0, y(t)) \cdot c_t$$

wobei

$c_t \sim \text{Bernoulli}(1 - p)$

mit p einer vorgegebenen Dropout-Rate.

Die residualen Schichten 43 werden nacheinander durchlaufen und der finale Ausgang der residualen Schicht 43 wird elementenweise auf den Eingang der jeweiligen residualen Schicht 43 addiert.

**Patentansprüche**

1. Verfahren zum Bestimmen einer Partikelbeladung eines Partikelfilters (6) mit mindestens einer Beladungsgröße, mit folgenden Schritten:

   - Erfassen (S1) oder Bereitstellen von mehreren Zustandsgrößen (T, $\dot{m}_{soot,in}$, $\dot{V}$, $p_{in}$) eines zugeführten Gasmassenstroms, die zumindest einen Partikelmassenstrom und eine insbesondere gemessene Druckunterschiedsangabe ($\Delta p_{mess}$) für einen tatsächlichen Druckunterschied zwischen einer Eingangsseite und einer Ausgangsseite des Partikelfilters (6) umfassen;
   - Bestimmen (S2) mindestens einer modellierten Beladungsgröße ($m_{soot,wall,mod}$, $m_{soot,layer,mod}$) mithilfe eines physikalischen Partikelfiltermodells (31) abhängig von der einen oder den mehreren Zustandsgrößen (T, $\dot{m}_{soot,in}$, $\dot{V}$, $p_{in}$) des zugeführten Gasmassenstroms;
   - Modellieren (S4) einer Korrekturgröße ($k_{soot,wall}$, $k_{soot,layer}$, $k\eta$) für die mindestens eine modellierte Beladungsgröße ($m_{soot,wall,mod}$, $m_{soot,layer,mod}$) mithilfe eines datenbasierten Fehlermodells (32) abhängig von den Zustandsgrößen (T, $\dot{m}_{soot,in}$, $\dot{V}$, pin) des zugeführten Gasmassenstroms, der Druckunterschiedsangabe ($\Delta p_{mess}$), wobei das Fehlermodell (32) einem temporalen konvolutionellen Netzwerk (TCM: temporal convolutional network) entspricht oder ein solches umfasst;
   - Bestimmen (S5) der mindestens einen Beladungsgröße ($m_{soot,wall}$, $m_{soot,layer}$) abhängig von der mindestens einen modellierten Beladungsgröße ($m_{soot,wall,mod}$, $m_{soot,layer,mod}$) und der modellierten Korrekturgröße ($k_{soot,wall}$, $k_{soot,layer}$, $k\eta$).

2. Verfahren nach Anspruch 1, wobei die Zustandsgrößen (T, $\dot{m}_{soot,in}$, $\dot{V}$, $p_{in}$) ein Gasvolumenstrom ($\dot{m}_{soot,in}$), eine Temperatur (T) und/oder einen Druck umfassen.

3. Verfahren nach einem der Ansprüche 1 und 2, wobei die Beladungsgröße ($m_{soot,wall}$, $m_{soot,layer}$) und die modellierte Beladungsgröße ($m_{soot,wall,mod}$, $m_{soot,layer,mod}$) umfassen:

   - - eine Wandbeladungsgröße ($m_{soot,wall}$, $m_{soot,wall,mod}$), die eine Menge an Oberflächen eines Filtermaterials (63) des Partikelfilters (6) angelagerten Partikel angibt, und eine modellierte Wandbeladungsgröße, die eine modellierte Menge an Oberflächen des Filtermaterials (63) des Partikelfilters (6) angelagerten Partikel angibt; und/oder,
   - - eine Kuchenbeladungsgröße ($m_{soot,layer}$, $m_{soot,layer,mod}$), die eine Menge in einem Kuchen auf einer Oberfläche eines Filterelements des Partikelfilters (6) abgelagerten Partikel angibt, und eine modellierte Kuchenbeladungsgröße, die eine modellierte Menge in einem Kuchen auf einer Oberfläche eines Filterelements (63) des Partikelfilters (6) abgelagerten Partikel angibt; und/oder
   - - einen Filterwirkungsgrad ($\eta$), der die Reinigungseffizienz des Partikelfilters (6) angibt, und einen modellierten Filterwirkungsgrad, der die modellierte Reinigungseffizienz des Partikelfilters (6) angibt.

4. Verfahren nach einem der Ansprüche 1-3, wobei das Fehlermodell (32) trainiert ist, um abhängig von Verläufen der Zustandsgrößen (T, $\dot{m}_{soot,in}$, $\dot{V}$, $p_{in}$), der Druckunterschiedsangabe ($\Delta p_{mess}$) und der modellierten Druckunterschiedsangabe ($\Delta p_{mod}$) die jeweilige Korrekturgröße ($k_{soot,wall}$, $k_{soot,layer}$, $k\eta$) für die jeweilige Beladungsgröße anzugeben, wobei die jeweilige Korrekturgröße ($k_{soot,wall}$, $k_{soot,layer}$, $k\eta$) ausgebildet ist, die jeweilige modellierte Beladungsgröße ($m_{soot,wall,mod}$, $m_{soot,layer,mod}$) zu beaufschlagen, insbesondere additiv oder multiplikativ zu beaufschlagen.

5. Verfahren nach einem der Ansprüche 1-4, wobei eine modellierte Druckunterschiedsangabe ($\Delta p_{mod}$) zwischen eingangsseitigem und ausgangsseitigem Druck über dem Partikelfilter (6) mithilfe des physikalischen Partikelfiltermodells (31) ermittelt wird, wobei die Korrekturgröße ($k_{soot,wall}$, $k_{soot,layer}$, $k\eta$) für die mindestens eine modellierte Beladungsgröße ($m_{soot,wall,mod}$, $m_{soot,layer,mod}$) mithilfe des datenbasierten Fehlermodells (32) weiterhin abhängig von der modellierten Druckunterschiedsangabe ($\Delta p_{mod}$) durchgeführt wird, wobei das Fehlermodell (32) trainiert ist, um abhängig von Verläufen der Zustandsgrö-βen (T, $\dot{m}_{soot,in}$, $\dot{V}$, $p_{in}$), der Druckunterschiedsangabe ($\Delta p_{mess}$) und der modellierten Druckunterschiedsangabe ($\Delta p_{mod}$) die jeweilige Korrekturgröße ($k_{soot,wall}$, $k_{soot,layer}$, $k\eta$) zur Ermittlung der jeweiligen Beladungsgröße ($m_{soot,wall}$, $m_{soot,layer}$) anzugeben, wobei die jeweilige Korrekturgröße ($k_{soot,wall}$, $k_{soot,layer}$, $k\eta$) ausgebildet ist, die jeweilige modellierte Beladungsgröße ($m_{soot,wall,mod}$, $m_{soot,layer,mod}$) zu beaufschlagen, insbesondere additiv oder multiplikativ zu beaufschlagen.

**6.** Verfahren nach einem der Ansprüche 1-5, wobei das Verfahren zyklisch in Zeitschritten ausgeführt wird, wobei in jedem Zeitschritt die Werte der Zustandsgrößen (T, $\dot{m}_{soot,in}$, $\dot{V}$, Pin), der Druckunterschiedsangabe ($\Delta p_{mess}$) und ggfs. der modellierten Druckunterschiedsangabe ($\Delta p_{mod}$) zwischengespeichert werden, wobei dem Fehlermodell (32) Zeitreihen der Zustandsgrößen (T, $\dot{m}_{soot,in}$, $\dot{V}$, $p_{in}$), der Druckunterschiedsangabe ($\Delta p_{mess}$) und ggfs. der modellierten Druckunterschiedsangabe ($\Delta p_{mod}$) für einen zurückliegenden Auswertungszeitraum bereitgestellt wird.

**7.** Verfahren nach einem der Ansprüche 1-6, wobei abhängig von der mindestens einen Beladungsgröße ($m_{soot,wall}$, $m_{soot,layer}$) der Partikelfilter (6) regeneriert wird oder eine planmäßige Regeneration des Partikelfilters (6) unterbunden wird.

**8.** Verfahren nach einem der Ansprüche 1-7, wobei der Partikelfilter (6) als ein Abgaspartikelfilter in einer Abgasnachbehandlungseinrichtung eines Kraftfahrzeugs verwendet wird.

**9.** Verfahren nach einem der Ansprüche 1-8, wobei das temporale konvolutionelle Netzwerk zwischen 5 und 30 residuale Schichten aufweist, die ein erstes Unternetzwerk für eine Normalisierung und ein zweites Unternetzwerk für eine kausale Konvolution mit einer sich zu weiter nachgeordneten residualen Schichten erhöhenden Dilationsrate aufweist.

**10.** Computerprogrammprodukt, umfassend Befehle, die bei der Ausführung des Programms durch eine Steuereinheit eines Verbrennungsmotors diese veranlassen, die Schritte des Verfahrens nach einem der Ansprüche 1 bis 9 auszuführen.

**11.** Maschinenlesbares Speichermedium, umfassend Befehle, die bei der Ausführung durch eine Steuereinheit eines Verbrennungsmotors diese veranlassen, die Schritte des Verfahrens nach einem der Ansprüche 1 bis 9 auszuführen.

**Claims**

**1.** Method for determining a particle loading of a particle filter (6) with at least one loading variable, by performing the following steps:

- detecting (S1) or providing a number of state variables (T, $\dot{m}_{soot,in}$, $\dot{V}$, $p_{in}$) of a supplied mass flow of gas, which comprise at least one mass flow of particles and a pressure difference indication, in particular a measured pressure difference indication ($\Delta p_{mess}$), for an actual pressure difference between an input side and an output side of the particle filter (6);
- determining (S2) at least one modelled loading variable ($m_{soot,wall,mod}$, $m_{soot,layer,mod}$) with the aid of a physical particle filter model (31) depending on the one or more state variables (T, $\dot{m}_{soot,in}$, $\dot{V}$, $p_{in}$) of the mass flow of gas supplied;
- modelling (S4) a correction variable ($k_{soot,wall}$, $k_{soot,layer}$, $k\eta$) for the at least one modelled loading variable ($m_{soot,wall,mod}$, $m_{soot,layer,mod}$) with the aid of a data-based error model (32) depending on the state variables (T, $\dot{m}_{soot,in}$, $\dot{V}$, $p_{in}$) of the mass flow of gas supplied, the pressure difference indication ($\Delta p_{mess}$), wherein the error model (32) corresponds to a temporal convolutional network (TCM) or comprises such a network;
- determining (S5) the at least one loading variable ($m_{soot,wall}$, $m_{soot,layer}$) depending on the at least one modelled loading variable ($m_{soot,wall,mod}$, $m_{soot,layer,mod}$) and the modelled correction variable ($k_{soot,wall}$, $k_{soot,layer}$, $k\eta$).

**2.** Method according to Claim 1, wherein the state variables (T, $\dot{m}_{soot,in}$, $\dot{V}$, $p_{in}$) comprise a gas volume flow ($\dot{m}_{soot,in}$), a temperature (T) and/or a pressure.

**3.** Method according to either of Claims 1 and 2, wherein the loading variable ($m_{soot,wall}$, $m_{soot,layer}$) and the modelled loading variable ($m_{soot,wall,mod}$, $m_{soot,layer,mod}$) comprise:

- a wall loading variable ($m_{soot,wall}$, $m_{soot,wall,mod}$), which indicates an amount of particles accumulated on surfaces of a filter material (63) of the particle filter (6), and a modelled wall loading variable, which indicates a modelled amount of particles accumulated on surfaces of the filter material (63) of the particle filter (6); and/or
- a cake loading variable ($m_{soot,layer}$, $m_{soot,layer,mod}$), which indicates an amount of particles deposited in a cake on a surface of a filter element of the particle filter (6), and a modelled cake loading variable, which indicates a modelled amount of particles deposited in a cake on a surface of a filter element (63) of the particle filter (6)
- a filter efficiency ($\eta$), which indicates the cleaning efficiency of the particle filter (6), and a modelled filter efficiency, which indicates the modelled cleaning efficiency of the particle filter (6).

**4.** Method according to one of Claims 1-3, wherein the error model (32) is trained to indicate the respective correction variable ($k_{soot,wall}$, $k_{soot,layer}$, $k\eta$) for the respective loading variable depending on progressions of the state variables (T, $\dot{m}_{soot,in}$, $\dot{V}$, $p_{in}$), the pressure difference indication ($\Delta p_{mess}$) and

the modelled pressure difference indication ($\Delta p_{mod}$), wherein the respective correction variable ($k_{soot,wall}$, $k_{soot,layer}$, $k\eta$) is designed to apply, in particular additively or multiplicatively apply, the respective modelled loading variable ($m_{soot,wall,mod}$, $m_{soot,layer,mod}$).

5. Method according to one of Claims 1-4, wherein a modelled pressure difference indication ($\Delta p_{mod}$) between the input-side pressure and the output-side pressure over the particle filter (6) is ascertained with the aid of the physical particle filter model (31), wherein the correction variable ($k_{soot,wall}$, $k_{soot,layer}$, $k\eta$) for the at least one modelled loading variable ($m_{soot,wall,mod}$, $m_{soot,layer,mod}$) is also implemented with the aid of the data-based error model (32) depending on the modelled pressure difference indication ($\Delta p_{mod}$), wherein the error model (32) is trained to indicate the respective correction variable ($k_{soot,wall}$, $k_{soot,layer}$, $k\eta$) for ascertaining the respective loading variable ($m_{soot,wall}$, $m_{soot,layer}$) depending on progressions of the state variables (T, $\dot{m}_{soot,in}$, $V$, $p_{in}$), the pressure difference indication ($\Delta p_{mess}$) and the modelled pressure difference indication ($\Delta p_{mod}$), wherein the respective correction variable ($k_{soot,wall}$, $k_{soot,layer}$, $k\eta$) is designed to apply, in particular additively or multiplicatively apply, the respective modelled loading variable ($m_{soot,wall,mod}$, $m_{soot,layer,mod}$).

6. Method according to one of Claims 1-5, wherein the method is performed cyclically in time increments, wherein in each time increment the values of the state variables (T, $\dot{m}_{soot,in}$, $V$, Pin), the pressure difference indication ($\Delta p_{mess}$) and, if applicable, the modelled pressure difference indication ($\Delta p_{mod}$) are buffer-stored, wherein the error model (32) is provided with time series of the state variables (T, $\dot{m}_{soot,in}$, $V$, Pin), the pressure difference indication ($\Delta p_{mess}$) and, if applicable, the modelled pressure difference indication ($\Delta p_{mod}$) for a previous evaluation time period.

7. Method according to one of Claims 1-6, wherein, depending on the at least one loading variable ($m_{soot,wall}$, $m_{soot,layer}$), the particle filter (6) is regenerated or a planned regeneration of the particle filter (6) is prevented.

8. Method according to one of Claims 1-7, wherein the particle filter (6) is used as an exhaust particle filter in an exhaust gas aftertreatment device of a motor vehicle.

9. Method according to one of Claims 1-8, wherein the temporal convolutional network has between 5 and 30 residual layers, comprising a first subnetwork for a normalization and a second subnetwork for a causal convolution with a dilation rate increasing towards further subordinate residual layers.

10. Computer program product, comprising commands which, when the program is executed by a control unit of an internal combustion engine, cause it to perform the steps of the method according to one of Claims 1 to 9.

11. Machine-readable storage medium, comprising commands which, when executed by a control unit of an internal combustion engine, cause it to perform the steps of the method according to one of Claims 1 to 9.

**Revendications**

1. Procédé de détermination d'une charge en particules d'un filtre à particules (6) avec au moins une grandeur de charge, comprenant les étapes suivantes :

   - acquisition (S1) ou fourniture de plusieurs grandeurs d'état (T, $\dot{m}_{soot,in}$, $V$, $p_{in}$) d'un débit massique de gaz acheminé, lesquelles comprennent au moins un débit massique de particules et une indication de différence de pression ($\Delta p_{mess}$), notamment mesurée, pour une différence de pression effective entre un côté entrée et un côté sortie du filtre à particules (6) ;
   - détermination (S2) d'au moins une grandeur de charge modélisée ($m_{soot,wall,mod}$, $m_{soot,layer,mod}$) à l'aide d'un modèle physique de filtre à particules (31) en fonction de l'une ou des plusieurs grandeurs d'état (T, $\dot{m}_{soot,in}$, $V$, $p_{in}$) du débit massique de gaz acheminé ;
   - modélisation (S4) d'une grandeur de correction ($k_{soot,wal}$, $k_{soot,layer}$, $k\eta$) pour l'au moins une grandeur de charge modélisée ($m_{soot,wall,mod}$, $m_{soot,layer,mod}$) à l'aide d'un modèle d'erreur (32) basé sur des données en fonction des grandeurs d'état (T, $\dot{m}_{soot,in}$, $V$, pin) du débit massique de gaz acheminé, de l'indication de différence de pression ($\Delta p_{mess}$), le modèle d'erreur (32) correspondant à un réseau convolutif temporel (TCM : temporal convolutional network) ou comprenant un tel réseau ;
   - détermination (S5) de l'au moins une grandeur de charge ($m_{soot,wall}$, $m_{soot,layer}$) en fonction de l'au moins une grandeur de charge modélisée ($m_{soot,wall,mod}$, $m_{soot,layer,mod}$) et de la grandeur de correction modélisée ($k_{soot,wall}$, $k_{soot,layer}$, $k\eta$).

2. Procédé selon la revendication 1, les grandeurs d'état (T, $\dot{m}_{soot,in}$, $V$, $p_{in}$) comprenant un débit volumique de gaz ($m_{soot,in}$), une température (T) et/ou une pression.

**3.** Procédé selon l'une des revendications 1 et 2, la grandeur de charge ($m_{soot,wall}$, $m_{soot,layer}$) et la grandeur de charge modélisée ($m_{soot,wall,mod}$, $m_{soot,layer,mod}$) comprenant :

- une grandeur de charge de paroi ($m_{soot,wall}$, $m_{soot,wall,mod}$), qui indique une quantité de particules déposées sur des surfaces d'un matériau filtrant (63) du filtre à particules (6), et une grandeur de charge de paroi modélisée, qui indique une quantité modélisée de particules déposées sur des surfaces du matériau filtrant (63) du filtre à particules (6) ; et/ou,

- une grandeur de charge de tourteau ($m_{soot,layer}$, $m_{soot,layer,mod}$), qui indique une quantité de particules déposées dans un tourteau sur une surface d'un élément filtrant du filtre à particules (6), et une grandeur de charge de tourteau modélisée, qui indique une quantité modélisée de particules déposées dans un tourteau sur une surface d'un élément filtrant (63) du filtre à particules (6) ; et/ou

- un taux d'efficacité de filtrage ($\eta$), qui indique l'efficacité de nettoyage du filtre à particules (6), et un taux d'efficacité de filtrage modélisé, qui indique l'efficacité de nettoyage modélisée du filtre à particules (6).

**4.** Procédé selon l'une des revendications 1-3, le modèle d'erreur (32) étant entraîné pour indiquer la grandeur de correction ($k_{soot,wall}$, $k_{soot,layer}$, $k\eta$) respective pour la grandeur de charge respective en fonction des évolutions des grandeurs d'état (T, $\dot{m}_{soot,in}$, $\dot{V}$, $p_{in}$), de l'indication de différence de pression ($\Delta p_{mess}$) et de l'indication de différence de pression modélisée ($\Delta p_{mod}$), la grandeur de correction ($k_{soot,wall}$, $k_{soot,layer}$, $k\eta$) respective étant configurée pour appliquer, la grandeur de charge modélisée ($m_{soot,wall,mod}$, $m_{soot,layer,mod}$) respective, notamment l'appliquer de manière additive ou multiplicative.

**5.** Procédé selon l'une des revendications 1 à 4, une indication de différence de pression modélisée ($\Delta p_{mod}$) entre la pression côté entrée et la pression côté sortie à travers le filtre à particules (6) étant déterminée à l'aide du modèle physique de filtre à particules (31), la grandeur de correction ($k_{soot,wall}$, $k_{soot,layer}$, $k\eta$) pour l'au moins une grandeur de charge modélisée ($m_{soot,wall,mod}$, $m_{soot,layer,mod}$) étant en outre effectuée à l'aide du modèle d'erreur basé sur des données (32) en fonction de l'indication de différence de pression modélisée ($\Delta p_{mod}$), le modèle d'erreur (32) étant entraîné pour délivrer, en fonction des évolutions des grandeurs d'état (T, $\dot{m}_{soot,in}$, $\dot{V}$, $p_{in}$), de l'indication de différence de pression ($\Delta p_{mess}$) et de l'indication de différence de pression modélisée ($\Delta p_{mod}$), la grandeur de correction ($k_{soot,wall}$, $k_{soot,layer}$, $k\eta$) respective en vue de déterminer la grandeur de charge ($m_{soot,wall}$, $m_{soot,layer}$) respective, la grandeur de correction ($k_{soot,wall}$, $k_{soot,layer}$, $k\eta$) respective étant configurée pour appliquer la grandeur de charge modélisée ($m_{soot,wall,mod}$, $m_{soot,layer,mod}$) respective, notamment l'appliquer de manière additive ou multiplicative.

**6.** Procédé selon l'une des revendications 1 à 5, le procédé étant mis en oeuvre de manière cyclique par pas de temps, à chaque pas de temps, les valeurs des grandeurs d'état (T, $\dot{m}_{soot,in}$, $\dot{V}$, $p_{in}$), de l'indication de différence de pression ($\Delta p_{mess}$) et, le cas échéant, de l'indication de différence de pression modélisée ($\Delta p_{mod}$) étant mémorisées temporairement, des séries temporelles des grandeurs d'état (T, $\dot{m}_{soot,in}$, $\dot{V}$, $p_{in}$), de l'indication de différence de pression ($\Delta p_{mess}$) et, le cas échéant, de l'indication de différence de pression modélisée ($\Delta p_{mod}$) pour une période d'évaluation passée étant mises à disposition du modèle d'erreur (32).

**7.** Procédé selon l'une des revendications 1 à 6, le filtre à particules (6) étant régénéré, ou une régénération programmée du filtre à particules (6) étant empêchée en fonction de l'au moins une grandeur de charge ($m_{soot,wall}$, $m_{soot,layer}$).

**8.** Procédé selon l'une des revendications 1 à 7, le filtre à particules (6) étant utilisé comme un filtre à particules de gaz d'échappement dans un dispositif de post-traitement des gaz d'échappement d'un véhicule automobile.

**9.** Procédé selon l'une des revendications 1 à 8, le réseau convolutif temporel possédant entre 5 et 30 couches résiduelles, lesquelles possèdent un premier sous-réseau pour une normalisation et un deuxième sous-réseau pour une convolution causale avec un taux de dilution qui augmente vers des couches résiduelles plus en aval.

**10.** Programme informatique, comprenant des instructions qui, lors de l'exécution du programme par une unité de commande d'un moteur à combustion interne, amènent celle-ci à exécuter les étapes du procédé selon l'une des revendications 1 à 9.

**11.** Support d'enregistrement lisible par une machine, comprenant des instructions qui, lorsqu'elles sont exécutées par une unité de commande d'un moteur à combustion interne, amènent celle-ci à exécuter les étapes du procédé selon l'une des revendications 1 à 9.

FIG. 1

FIG. 2

FIG. 3

FIG. 4

37　41　43　43　42

**FIG. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004055605 A1
- CN 110725738 B
- WO 2006055992 A2

**In der Beschreibung aufgeführte Nicht-Patentliteratur**

- **BAI S. et al.** An Empirical Evaluation of Generic Convolutional and Recurrent Networks for Sequence Modelling. *arxiv:1 802.01271 v2,* 19. April 2018
- **YARIN GAL et al.** Dropout as a Bayesian Approximation: Representing Model Uncertainty in Deep Learning. University of Cambridge